# EUROPÄISCHE PATENTSCHRIFT

(11) **EP 2 044 400 B1**
(45) Veröffentlichungstag und Bekanntmachung des Hinweises auf die Patenterteilung: **03.10.2012**
(21) Anmeldenummer: 07765425.9
(22) Anmeldetag: 14.06.2007
(51) Int. Cl.: G01F 23/296, G01N 9/00, G01N 11/16

(54) **VORRICHTUNG MIT EINER MECHANISCH SCHWINGFÄHIGEN EINHEIT ZUR BESTIMMUNG UND/ODER UBERWACHUNG EINER PROZESSGRÖSSE EINES MEDIUMS**
APPARATUS HAVING A UNIT WHICH IS CAPABLE OF MECHANICAL OSCILLATION AND IS INTENDED TO DETERMINE AND/OR MONITOR A PROCESS VARIABLE OF A MEDIUM
DISPOSITIF COMPRENANT UNE UNITÉ OSCILLANTE MÉCANIQUE POUR DÉTERMINER ET/OU SURVEILLER UNE GRANDEUR DE PROCÉDÉ D'UN FLUIDE

(30) Priorität: 20.07.2006 DE 102006034105
(43) Veröffentlichungstag der Anmeldung: 08.04.2009
(73) Patentinhaber: Endress+Hauser GmbH+Co. KG, 79689 Maulburg (DE)
(72) Erfinder: D'ANGELICO, Sascha, 79595 Rümmingen (DE); FERRARO, Franco, 79739 Schwörstadt (DE); MÜLLER, Alexander, 79361 Sasbach-Jechtingen (DE)
(74) Vertreter: Andres, Angelika Maria
(86) Internationale Anmeldenummer: PCT/EP2007/055908
(87) Internationale Veröffentlichungsnummer: WO 2008/009523

(56) Entgegenhaltungen:
- EP-A- 0 209 872
- DE-A1- 10 161 071
- DE-A1-102005 015 547
- GB-A- 2 001 761
- GB-A- 2 187 286
- US-A- 4 783 987
- US-A1- 2005 052 813

## Beschreibung

Die Erfindung bezieht sich auf eine Vorrichtung zur Bestimmung und/oder Überwachung mindestens einer Prozessgröße eines Mediums in einem Behälter, mit mindestens einer mechanisch schwingfähigen Einheit, mit mindestens einer Anrege-/Empfangseinheit, welche die mechanisch schwingfähige Einheit zu mechanischen Schwingungen anregt und welche die mechanischen Schwingungen der mechanisch schwingfähigen Einheit empfängt, und mit mindestens einer Elektronikeinheit, weiche die Anrege-/Empfangseinheit mit einem elektrischen Ausgangssignal S_{A} beaufschlagt, und welche von der Anrege-/Empfangseinheit ein elektrisches Eingangssignal S_{E} empfängt, dass in der Elektronikeinheit mindestens eine Verstärkungseinheit vorgesehen ist, welche das elektrische Eingangssignal S_{E} zu einem verstärkten Signal Sᵥ verstärkt wobei mindestens ein einstellbarer Phasenschieber vorgesehen ist, welcher die Phase des verstärkten Signals verändert, und wobei mindestens eine Steuereinheit vorgesehen ist, welche den Phasenschieber steuert. Bei dem Medium handelt es sich beispielsweise um eine Flüssigkeit oder um ein Schüttgut. Die Prozessgröße ist weiterhin beispielsweise der Füllstand, die Dichte oder die Viskosität des Mediums.

Im Stand der Technik sind bereits Messgeräte bekannt, bei denen eine sog. Schwinggabel als mechanisch schwingfählge Einheit zu Schwingungen angeregt wird. Da die Schwingungen, bzw. deren Kenngrößen wie Frequenz, Amplitude und Phase abhängig sind vom Kontakt mit einem Medium bzw. von dessen Eigenschaften wie Dichte oder Viskosität, lässt sich aus den Kenngrößen der Schwingungen auf diese Messgröβen rückschließen. So ist mit einem solchen Messgerät beispielsweise die Überwachung des Füllstandes oder die Messung der Dichte des Mediums möglich.

Es hat sich gezeigt, dass es Bereiche von Phasendifferenzen zwischen dem Anrege- und dem Empfangssignal gibt, in denen das Verhalten des Schwingsystems in gewisser Hinsicht beeinflusst werden kann. So lässt sich das Dektektleren von Schaum ermöglichen oder unterdrücken. Weiterhin kann die Abhängigkeit der Schwingungen von Änderungen der Viskosität kompensiert werden (siehe DE 100 57 974 A1). Um diese Effekte zu erzielen, ist es jedoch erforderlich, dass die gewünschten Phasenwerte möglichst genau erzielt werden.

Aus der Offenlegungsschrift DE 10161071 A1 ist ein vibronisches Messgerät mit einem Phasenschieber gezeigt, welcher als Ringspeicher ausgestaltet ist. Dieser ist rein digital und Teil des Schwingkreises, über welchen die Antriebs-/Empfangseinheit zu Schwingungen anregbar ist.

In der Schrift EP 0209872 A2 ist ein Phasenschieber in Form eines Allpasses mit variabler Phasenverschiebung offenbart.

Die GB 2187286 A zeigt einen Schwingkreis mit analogen Bauelementen. Zur Kompensation der von dem Verstärker erzeugten Phasenverschiebung ist ein Kompensationselement in den Schwingkreis eingebracht, welches ein derartiges Frequenz-Phasen-Verhalten aufweist, dass die von dem Kompensationselement erzeugte Phasenverschiebung entgegengesetzt zu der von dem Verstärker erzeugten Phasenverschiebung ist.

Die Schrift US 4783987 A offenbart ein System mit einem über einen Verstärker zu Schwingungen anregbaren piezoelektrischen Element. Zur Vermeidung der mit einer Phasenverschiebung einhergehenden Frequenzverschiebung wird die von dem Verstärker verursachte Phasenverschiebung mittels eines digitalen Phasenschiebers korrigiert.

Daher ist es die Aufgabe der Erfindung, ein Messgerät vorzuschlagen, bei welchem die Phase zwischen Empfangs- und Anregesignal möglichst genau und reproduzierbar einstellbar ist.

Die Erfindung löst die Aufgabe in einer ersten Variante dadurch, dass Steuereinheit derartig ausgestattet ist, dass die Steuereinheit mindestens die Frequenz des verstärkten Signals Sv misst, und dass die Steuereinheit mindestens ausgehend von hinterlegten Daten über die Frequenz-Phasen-Abhängigkeit der Verstärkereinheit den Phasenschieber steuert und dass die Steuereinheit mindestens das Ausgangssignal mindestens hinsichtlich der Phase auswertet und die Phase des Ausgangssignals mit einem vorgegebenen Phasensollwert vergleicht, und dass die Steuereinheit ausgehend von dem Vergleich den Phasenschieber nachregelt. Die Elektronikeinheit weist somit zumindest die Verstärkungseinheit, den Phasenschieber und die Steuereinheit auf. Da die Eingangssignale S_{E} vor einer Auswertung meist zuerst einer Aufarbeitung bedürfen, sind üblicherweise zunächst eine Verstärkung und dabei meist auch eine Filterung erforderlich. Dieses so verstärkte und in einer Ausgestaltung auch gefilterte Signal Sᵥ wird erfindungsgemäß der Steuereinheit zugeführt. Die Bestimmung der Phase dieses Signals, also die Phase, die sich durch die Verstärkungseinheit ergibt, erfolgt über die Auswertung der Phase des Signals Sᵥ, wobei die Zuordnung von Frequenz zu Phase über hinterlegte Daten oder abgespeicherte Formeln erfolgt, d.h. aufgrund des bekannten Verhaltens der Verstärkungseinheit wird aus der Frequenz des verstärkten und/oder gefilterten Signals Sᵥ auf dessen Phase geschlossen, und damit wird dann der Phasenschieber passend gesteuert. Die Erfindung ermöglichst somit, dass die Phase nicht mehr abhängig von der Frequenz jeweils einen unterschiedlichen Wert aufweist, sondem dass die Phase über alle Frequenzen im Wesentlichen den gleichen Wert hat, welcher einem vorgebbaren Sollwert entspricht. D.h. die Schwingungsanregung erfolgt jeweils mit der erforderlichen bzw. wählbaren Phase. Diese erfindungsgemäße Vorgehensweise lässt sich als Steuerung aufpassen, bei welcher ausgehend von der über die Frequenz bekannten Phasenverschiebung die Phase passend zum Sollwert eingestellt wird.

Weiterhin sicht die Erdindung vor, dass die Steuereinheit mindestens das Ausgangssignal S_{A} mindestens hinsichtlich der Phase auswertet und die Phase des Ausgangssignals S_{A} mit einem vorgegebenen Phasenwert vergleicht, wobei die Auswenung der Phase durch Bestimmung der Phasendifferenz zwischen dern Ausgangssignals S_{A} und dem verstärkten Signal Sᵥ erfolgt und dass die Steuereinheit ausgehend von dem Vergleich den Phasenschieber steuert. Aus der Steuerung wird somit eine Regelung der Elektronik in Bezug auf die Phase, wobei der Teil der Verstärkungseinheit eine Regelung erfährt, welche zwischen dem Bereich liegt, an welchem das Signal Sᵥ abgegriffen und der Steuereinheit zugeführt wird, und dem Ausgangssignal S_{A}, wobei der Bereich zwischen Eingangssignal S_{E} und verstärktem Signal Sᵥ durch die hinterlegten Daten bzw. Formeln erfasst wird. Durch diese Ausgestaltung der ersten erfindungsgemäßen Variante wird somit aus der Steuerung eine Regelung über einen Abschnitt der Elektronikeinheit, indem das Ergebnis der Phasenschiebung mit dem gewünschten Wert verglichen wird und passend korrigiert wird. Die Auswertung der Phase des Ausgangssignal S_{A} erfolgt dadurch, dass die Phasendifferenz zwischen dem Ausgangssignal S_{A} und dem verstärkten Signal Sv bestimmt wird, wobei auch die Information über die Frequenz erforderlich ist.

Die erste erfindungsgemäße Variante ermöglicht somit eine Steuerung bzw. eine Regelung der Phase eines Teiles der Grundwellenanregung.

In einer zweiten Variante löst die Erfindung die Aufgabe dadurch, dass Steuereinheit derartig ausgestaltet ist, dass die Steuereinheit mindestens die Phasendifferenz zwischen dem elektrischen Ausgangssignal S_{A} und dem elektrischen Eingangssignal S_{E} misst, und dass die Steuereinheit den Phasenschieber steuert. In dieser Variante wird somit die Phase, die sich über die gesamte Elektronik ergibt, direkt - ausgehend von Ausgangssignal S_{A} und Eingangssignal S_{E} - gemessen und es wird passend der Phasenschieber so gesteuert, dass die Phase dem vorgebbaren Sollwert entspricht. Es findet somit eine vollständige Regelung über die gesamte Elektronik bzw. über den gesamten Schwingkreis statt. Für die Auswertung des Eingangssignal S_{E} wird dieses ggf. von der Steuereinheit, welche zumindest einen Mikroprozessor umfasst, passend gesampelt und digital gefiltert. Für eine Überprüfung der Phase, welche sich durch die Elektronikeinheit ergibt, wird beispielsweise in einer Testphase das Ausgangssignal S_{A} direkt auf den Eingang der Elektronikeinheit, d.h. ohne den Weg über die schwingfähige Einheit gegeben. Durch diese Rückkopplung lässt sich somit direkt das Ergebnis der Phaseneinstellung überwachen bzw. kontrollieren. Die Steuereinheit, bei welcher es sich wie bei der ersten Variante vorzugsweise um einen Mikrocontroller handelt, empfängt direkt das Eingangssignal S_{E} und das Ausgangssignal S_{A} und bestimmt die Phasendifferenz zwischen beiden Signalen. Aus einer Abweichung dieser Phasendifferenz zu einem vorgebbaren Sollwerte wird dann die Regelung des Phasenschiebers bewerkstelligt. Diese zweite Variante dient somit der Phasenregelung der kompletten Grundwellenanregung, welche von der Elektronikeinheit erzeugt wird.

Die weiteren Ausgestaltungen beziehen sich auf beide erfindungsgemäßen Varianten.

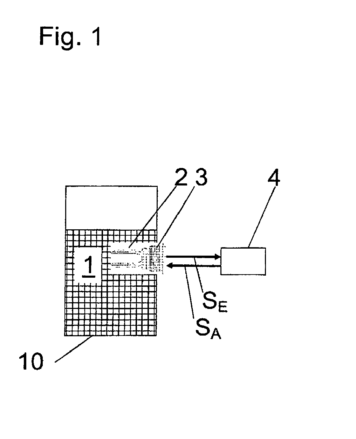

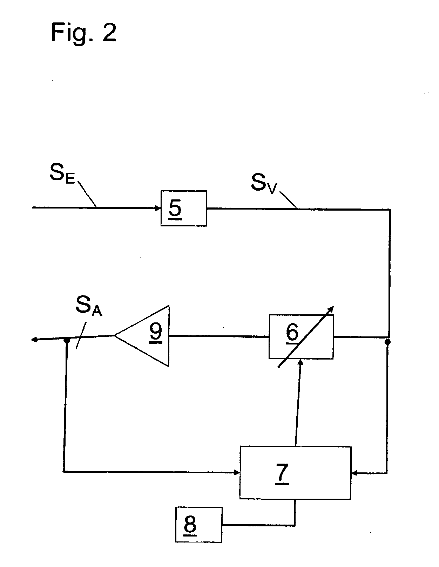

Eine Ausgestaltung beinhaltet, dass es sich bei dem Phasenschieber um einen Allpass handelt. diese Phase erfindungsgemäß eingestellt wird, ist in der Fig. 2 dargestellt.

In der Fig. 2 sind die erfindungsgemäßen Bestandteile der Elektronikeinheit 4 dargestellt. Das Empfangssignal S_{E} wird einer ersten Verstärkereinheit 5 und ggf. auch einem hier nicht dargestellten Filter zugeführt, welche daraus ein verstärktes Signal Sᵥ erzeugt bzw. ein verstärktes und gefiltertes Signal Sᵥ erzeugen. Die Verstärkungseinheit 5 bzw. die Kombination mit dem damit verbundenen Filter weist eine Frequenz-Phasen-Abhängigkeit auf. Diese Abhängigkeit wird in einem Abgleich ermittelt und passend in einer Speichereinheit 8 als einzelne Daten oder über einen funktionellen Zusammenhang abgelegt. Damit das Ausgangssignal S_{A} die gewünschte Phase aufweist, ist ein Phasenschieber 6, z.B. als Teil eines Allpasses, vorgesehen, welcher von der Steuereinheit 7 gesteuert wird. Die Steuerung erfolgt derart, dass das verstärkte Signal Sᵥ der Steuereinheit 7 zugeführt wird, welche die Frequenz f des verstärkten Signals Sᵥ misst. In Verbindung mit in der Speichereinheit 8 hinterlegten Daten steuert die Steuereinheit 7 den Phasenschieber dann derart, dass die gewünschte Phase erzielt wird. Hierzu ist es auch erforderlich, dass Kenntnisse über das weitere Phasenverhalten der Elektronik, welche sich an den Bereich anschließt, von welchem das Signal Sᵥ abgegriffen wird, bis hin zum Ausgang der Elektronikeinheit 4 bekannt ist. Beispielsweise ist für die Frequenz-Phasen-Abhängigkeit ein Polynom zweiten Grades hinterlegt. D.h. die Phase des verstärkten Signals Sᵥ ergibt sich nach der Verstärkungseinheit 5 zu fᵥ = af² + bf + c. Diese Funktion ergibt sich, indem die Frequenz-Phase-Kurve der Verstärkungseinheit 5 aufgenommen und die Koeffizienten des Polynoms daraus ermittelt werden. Soll weiterhin das Ausgangssignal S_{A} eine spezielle Phase f_{Soll} aufweisen, so ergibt sich die beim Phasenschieber einzustellende Phase f_{Regelung} zu f_{Regelung} = f_{Soll} - fv. Diese Steuerung lässt sich zu einer Regelung erweitern, indem auch das Anregesignal S _{A} der Steuereinheit 7 zugeführt wird. Somit kann die Steuereinheit 7 aus den beiden Signalen Sᵥ und dem Ausgangssignal S_{A} die Phase ermitteln und diese Phase in Verbindung mit der für die Verstärkungseinheit 5 über die Messung der Frequenz berechnete Phase den Phasenschieber 6 passend einstellen. D.h. die Elektronikeinheit 4 wird quasi geregelt, indem ein Abschnitt geregelt und die Auswirkungen eines anderen Abschnitts berechnet wird.

Ergibt sich durch den Abschnitt der Elektronikeinheit 4, welche zumindest die Verstärkungseinheit 5 und beispielsweise ggf. auch einen Filter umfasst, eine Phase f1 und ergibt sich auch dem sich daran anschließenden Abschnitt zumindest mit dem Phasenschieber 6 und dem Ausgangsverstärker 9 eine Phase f2, so ergibt sich über die Elektronikeinheit 4 insgesamt eine Phase fges = f1 + f2, welche gleich einem vorgebbaren Sollwert fges = fsoll sein soll.

Die Phase f1 wird aus der gemessenen Frequenz n über einen bekannten und vorher ausgemessenen funktionellen Zusammenhang ermittelt: f1 = f(n).

Die Phase f2 ergibt sich aus dem Vergleich des verstärkten Signals S und des Ausgangssignals S_{A}, d.h. sie wird direkt von der Steuereinheit 7 gemessen. Somit ergibt sich als Sollwert für die Regelung des Phasenschiebers 6: f2 = fges - f1 = fsoll - f(n).

Und über diese Regelung ist es möglich, dass die Phasendifferenz zwischen dem Eingangssignal S_{E} und dem Ausgangssignal S_{A} immer den jeweils erforderlichen Sollwert aufweist, um somit das Verhalten des Schwingungssystems in gewissen Bereichen zu beeinflussen, d.h. beispielsweise keine Auswirkungen von Änderungen der Viskosität auf die Frequenz der Schwingungen oder auch eine Unempfindlichkeit gegenüber Schaum.

Die beiden erfindungsgemäßen Varianten lassen sich wie folgt zusammenfassen:

In der ersten erfindungsgemäßen Variante wird in einer Ausgestaltung die Frequenz des verstärkten Signals Sᵥ gemessen und aufgrund der hinterlegten Daten wird die Phase über den Phasenschieber 6 eingestellt. Es findet also eine Steuerung statt.

In einer zweiten Ausgestaltung wird die Phasendifferenz zwischen dem verstärkten Signal Sᵥ und dem Ausgangssignals S_{A} gemessen und die Phase wird über den Phasenschieber 6 ggf. nachgeregelt. Somit findet also eine Regelung für einen Abschnitt der Elektronikeinheit statt.

In der zweiten erfindungsgemäßen Variante wird die Phase zwischen dem Ausgangssignal S_{A} und dem Eingangssignal S_{E} gemessen und über den Phasenschieber auf den erforderlichen Wert gesetzt. Somit wird eine Regelung über die gesamte Elektronikeinheit vorgenommen.

**Bezugszeichenliste**

**Tabelle 1**

| | |
|---|---|
| 1 | Medium |
| 2 | Mechanisch schwingfähige Einheit |
| 3 | Anrege-/Empfangseinheit |
| 4 | Elektronikeinheit |
| 5 | Verstärkungseinheit |
| 6 | Phasenschieber |
| 7 | Steuereinheit |
| 8 | Speichereinheit |
| 9 | Verstärker |
| 10 | Behälter |

## Patentansprüche

1. Vorrichtung zur Bestimmung und/oder Überwachung mindestens einer Prozessgröße eines Mediums (1) in einem Behälter (10),
mit mindestens einer mechanisch schwingfähigen Einheit (2),
mit mindestens einer Anrege-/Empfangseinheit (3), welche die mechanisch schwingfähige Einheit (2) zu mechanischen Schwingungen anregt und welche die mechanischen Schwingungen der mechanisch schwingfähigen Einheit (2) empfängt,
und
mit mindestens einer Elektronikeinheit (4), welche die Anrege-/Empfangseinheit (3) mit einem elektrischen Ausgangssignal (S_{A}) beaufschlagt, und welche von der Anrege-/Empfangseinheit (3) ein elektrisches Eingangssignal (S_{E}) empfängt,
wobei in der Elektronikeinheit (4) mindestens eine Verstärkungseinheit (5) vorgesehen ist, welche das elektrische Eingangssignal (S_{E}) zu einem verstärkten Signal (Sᵥ) verstärkt,
wobei mindestens ein einstellbarer Phasenschieber (6) vorgesehen ist, welcher die Phase des verstärkten Signals (Sv) verändert,
und wobei mindestens eine Steuereinheit (7) vorgesehen ist, welche den Phasenschieber (6) steuert,
**dadurch gekennzeichnet,**
**dass** die Steuereinheit (7) derartig ausgestaltet ist, dass die Steuereinheit (7) mindestens die Frequenz des verstärkten Signals (Sᵥ) misst, und dass die Steuereinheit (7) mindestens ausgehend von hinterlegten Daten über die Frequenz-Phasen-Abhängigkeit der Verstärkereinheit (5) den Phasenschieber (6) steuert,
**dass** die Steuereinheit (7) mindestens das Ausgangssignal (S_{A}) mindestens hinsichtlich der Phase auswertet und die Phase des Ausgangssignals (S_{A}) mit einem vorgegebenen Phasensollwert vergleicht, wobei die Auswertung der Phase durch Bestimmung der Phasendifferenz zwischen dem Ausgangssignal (S_{A}) und dem verstärkten Signal (Sᵥ) erfolgt,
und
**dass** die Steuereinheit (7) ausgehend von dem Vergleich den Phasenschieber (6) nachregelt.

2. Vorrichtung zur Bestimmung und/oder Überwachung mindestens einer Prozessgröße eines Mediums (1) in einem Behälter (10),
mit mindestens einer mechanisch schwingfähigen Einheit (2),
mit mindestens einer Anrege-/Empfangseinheit (3), welche die mechanisch schwingfähige Einheit (2) zu mechanischen Schwingungen anregt und weiche die mechanischen Schwingungen der mechanisch schwingfähigen Einheit (2) empfängt,
und
mit mindestens einer Elektronikeinheit (4), welche die Anrege-/Empfangseinheit (3) mit einem elektrischen Ausgangssignal (S_{A}) beaufschlagt, und welche von der Anrege-/Empfangseinheit (3) ein elektrisches Eingangssignal (S_{E}) empfängt,
wobei in der Elektronikeinheit (4) mindestens eine Verstärkungseinheit (5) vorgesehen ist, welche das elektrische Eingangssignal (S_{E}) zu einem verstärkten Signal (Sᵥ) verstärkt,
wobei mindestens ein einstellbarer Phasenschieber (6) vorgesehen ist,
welcher die Phase des verstärkten Signals (Sᵥ) verändert,
und wobei mindestens eine Steuereinheit (7) vorgesehen ist, weiche den Phasenschieber (6) steuert,
**dadurch gekennzeichnet,**
**dass** die Steuereinheit (7) derartig ausgestaltet ist, dass die Steuereinheit (7) mindestens die Phasendifferenz zwischen dem elektrischen Ausgangssignal (S_{A}) und dem elektrischen Eingangssignal (S_{E}) misst, und dass die Steuereinheit (7) den Phasenschieber (6) ausgehend von der gemessenen Phasendifferenz derart steuert, dass die Phasendifferenz einem vorgebbaren Sollwert entspricht.

3. Vorrichtung nach Anspruch 1 oder 2,
**dadurch gekennzeichnet,**
**dass** es sich bei dem Phasenschieber (6) um einen Allpass handelt.

4. Vorrichtung nach Anspruch 1 oder 2,
**dadurch gekennzeichnet,**
**dass** für die Frequenz-Phasen-Abhängigkeit der Verstärkereinheit (5) ein Satz von Daten und/oder eine Formel hinterlegt sind/ist.

5. Vorrichtung nach Anspruch 4,
**dadurch gekennzeichnet,**
**dass** mindestens eine Speichereinheit (8) vorgesehen ist, in welcher Daten über die Frequenz-Phasen-Abhängigkeit der Verstärkungseinheit (5) hinterlegt sind.

## Claims

1. Unit for determining and/or monitoring at least one process variable of a medium (1) in a container (10),
with at least one unit capable of mechanical vibration (2),
with at least one excitation/receiver unit (3), which causes the unit (2), which is capable of mechanical vibration, to vibrate mechanically and which receives the mechanical vibrations of the unit (2) capable of mechanical vibration,
and
with at least one electronic unit (4), which subjects the excitation/receiver unit (3) to an electrical output signal (S_{A}) and which receives an electrical input signal (S_{E}) from the excitation/receiver unit (3),
wherein at least one amplification unit (5) is provided in the electronic unit (4) which amplifies the electrical input signal (S_{E}) to an amplified signal (Sᵥ),
wherein at least one adjustable phase shifter (6) is provided which changes the phase of the amplified signal (Sᵥ),
and wherein at least one control unit is provided (7) which controls the phase shifter (6), **characterized in that**
the control unit (7) is designed in such a way that the control unit (7) measures at least the frequency of the amplified signal (Sᵥ), and **in that** the control unit (7) controls the phase shifter (6) at least on the basis of data saved regarding the frequency-phase-dependency of the amplification unit (5),
**in that** the control unit (7) evaluates at least the output signal (S_{A}) at least with regard to the phase and compares the phase of the output signal (S_{A}) with a predefined target phase value, wherein the phase is evaluated by determining the phase difference between the output signal (S_{A}) and the amplified signal (Sᵥ),
and
**in that** the control unit (7) readjusts the phase shifter (6) based on the comparison.

2. Unit for determining and/or monitoring at least one process variable of a medium (1) in a container (10),
with at least one unit capable of mechanical vibration (2),
with at least one excitation/receiver unit (3), which causes the unit (2), which is capable of mechanical vibration, to vibrate mechanically and which receives the mechanical vibrations of the unit (2) capable of mechanical vibration,
and
with at least one electronic unit (4), which subjects the excitation/receiver unit (3) to an electrical output signal (S_{A}) and which receives an electrical input signal (S_{E}) from the excitation/receiver unit (3),
wherein at least one amplification unit (5) is provided in the electronic unit (4) which amplifies the electrical input signal (S_{E}) to an amplified signal (Sᵥ),
wherein at least one adjustable phase shifter (6) is provided which changes the phase of the amplified signal (Sᵥ),
and wherein at least one control unit is provided (7) which controls the phase shifter (6),
**characterized in that**
the control unit (7) is designed in such a way that the control unit (7) measures at least the phase difference between the electrical output signal (S_{A}) and the electrical input signal (S_{E}) and **in that** the control unit (7) controls the phase shifter (6) on the basis of the measured phase difference in such a way that the phase difference corresponds to a predefinable target value.

3. Unit as claimed in Claim 1 or 2,
**characterized in that**
the phase shifter (6) is an all-pass filter.

4. Unit as claimed in Claim 1 or 2,
**characterized in that**
a data record and/or a formula is/are saved for the frequency-phase-dependency of the amplification unit (5).

5. Unit as claimed in Claim 4,
**characterized in that**
at least one memory unit (8) is provided which stores data on the frequency-phase-dependency of the amplification unit (5).

## Revendications

1. Dispositif destiné à la détermination et/ou la surveillance d'au moins une grandeur process d'un produit (1) dans un réservoir (10),
avec au moins une unité mécanique apte à vibrer (2),
avec au moins une unité d'excitation / de réception (3), laquelle excite en vibrations mécaniques l'unité mécanique apte à vibrer (2) et laquelle reçoit les vibrations mécaniques de l'unité mécanique apte à vibrer (2),
et
avec au moins une unité électronique (4), laquelle achemine à l'unité d'excitation / de réception (3) un signal de sortie électrique (SA), et laquelle reçoit de l'unité d'excitation /de réception (3) un signal d'entrée électrique (S_{E}),
au moins une unité d'amplification (5) étant prévue dans l'unité électronique (4), laquelle unité d'amplification amplifie le signal d'entrée électrique (S_{E}) en un signal amplifié (Sᵥ), au moins un déphaseur (6) réglable étant prévu, lequel modifie la phase du signal amplifié (Sᵥ),
et au moins une unité de commande (7) étant prévue, laquelle commande le déphaseur (6),
**caractérisé en ce**
**que** l'unité de commande (7) est conçue de telle sorte que l'unité de commande (7) mesure au moins la fréquence du signal amplifié (Sᵥ), et en ce que l'unité de commande (7) commande le déphaseur (6) au moins sur la base de données enregistrées, relatives à la dépendance fréquence-phase de l'unité d'amplification (5),
**que** l'unité de commande (7) interprète au moins le signal de sortie (SA), au moins concernant la phase, et compare la phase du signal de sortie (S_{A}) avec une valeur de consigne de phase prédéfinie, l'interprétation de la phase s'effectuant par la détermination de la différence de phase entre le signal de sortie (S_{A}) et le signal amplifié (Sᵥ),
et
**que** l'unité de commande (7) réajuste le déphaseur (6) sur la base de la comparaison.

2. Dispositif destiné à la détermination et/ou la surveillance d'au moins une grandeur process d'un produit (1) dans un réservoir (10),
avec au moins une unité mécanique apte à vibrer (2),
avec au moins une unité d'excitation / de réception (3), laquelle excite en vibrations mécaniques l'unité mécanique apte à vibrer (2) et laquelle reçoit les vibrations mécaniques de l'unité mécanique apte à vibrer (2),
et
avec au moins une unité électronique (4), laquelle achemine à l'unité d'excitation / de réception (3) un signal de sortie électrique (SA), et laquelle reçoit de l'unité d'excitation /de réception (3) un signal d'entrée électrique (S_{E}),
au moins une unité d'amplification (5) étant prévue dans l'unité électronique (4), laquelle unité d'amplification amplifie le signal d'entrée électrique (S_{E}) en un signal amplifié (Sᵥ), au moins un déphaseur (6) réglable étant prévu, lequel modifie la phase du signal amplifié (Sᵥ),
et au moins une unité de commande (7) étant prévue, laquelle commande le déphaseur (6),
**caractérisé en ce**
**que** l'unité de commande (7) est conçue de telle sorte que l'unité de commande (7) mesure au moins la différence de phase entre le signal de sortie électrique (S_{A}) et le signal d'entrée électrique (S_{E}), et en ce que l'unité de commande (7) commande le déphaseur (6), sur la base de la différence de phase mesurée, de telle sorte que la différence de phase corresponde à une valeur de consigne prédéfinie.

3. Dispositif selon la revendication 1 ou 2,
**caractérisé en ce**
**que**, concernant le déphaseur (6), il s'agit d'un filtre passe-tout.

4. Dispositif selon la revendication 1 ou 2,
**caractérisé en ce**
**qu'**un jeu de données et/ou une formule est enregistré(e) pour la dépendance fréquence-phase de l'unité d'amplification (5).

5. Dispositif selon la revendication 4,
**caractérisé en ce**
**qu'**est prévue au moins une unité de mémoire (8), dans laquelle sont enregistrées des données relatives à la dépendance fréquence-phase de l'unité d'amplification (5).
